**Europäisches Patentamt**

**European Patent Office**

**Office européen des brevets**

(19)

(11) Publication number: **0 153 042**
**B1**

(12) # EUROPEAN PATENT SPECIFICATION

(45) Date of publication of patent specification: **14.09.88**

(21) Application number: **85300597.3**

(22) Date of filing: **29.01.85**

(51) Int. Cl.⁴: **C 08 J 9/12,** C 08 L 101/00,
B 65 D 53/00 // (C08L101/00,
25:04)

(54) Foamable hot melt polymer compositions.

(30) Priority: **06.02.84 US 577118**
**20.09.84 US 652400**

(43) Date of publication of application:
**28.08.85 Bulletin 85/35**

(45) Publication of the grant of the patent:
**14.09.88 Bulletin 88/37**

(84) Designated Contracting States:
**AT BE CH DE FR GB IT LI LU NL SE**

(56) References cited:
**BE-A- 673 945**
**FR-A-2 223 407**
**US-A-4 259 402**

(73) Proprietor: **W.R. GRACE & CO.**
**62 Whittemore Avenue**
**Cambridge Massachusetts 02140 (US)**

(72) Inventor: **Trainor, Donna R.**
**9, Rickerhill Road**
**West Roxbury Massachusetts 02132 (US)**

(74) Representative: **Lawrence, Peter Robin**
**Broughton et al**
**GILL JENNINGS & EVERY 53-64 Chancery Lane**
**London WC2A 1HN (GB)**

Courier Press, Leamington Spa, England.

## Description

Hot melt compositions, that is compositions which become fluid when heated above ambient temperature and return to a non-fluid or less fluid state when cooled, have found wide use as adhesives and sealants in a number of applications. Often it is desirable that the hot melt composition should have a certain degree of resilience after application, and to this end, methods have been devised to impart a cellular structure to the applied composition.

Traditionally, a surfactant (foaming agent) is added to a thermoplastic polymer to reduce the size of the foamed cells (voids) and cause the voids to be of a more uniform size. For example, in US—A—4,156,754 and US—A—4,259,402, surfactants are added to molten thermoplastic material in order to extend the life or stability of the dispersions of gas in the hot melt adhesive foam, thereby facilitating the handling of the foam and improving, e.g., the bond strength of the product when used as an adhesive.

Foamed polymers formed of, for instance, sulphonated styrene polymer are described in FR—A—2223407.

The use of hot melt compositions having a cellular structure as sealants in closures for containers is described, for example, in US—A—4,295,573. In the procedure disclosed in this patent, a heated, pressurised mixture of thermoplastic hot melt composition and a gas such as nitrogen is formed and dispensed to the closure at atmospheric pressure while in a cellular or foamed state. Upon cooling, the cellular state of the applied composition is retained, providing a closure having a resilient sealant material applied thereto.

Closures comprising gaskets formed by compositions disclosed in US—A—4,295,573 have unsatisfactory properties, mainly due to the fact that the voids in the foam gaskets are non-uniform and give unsatisfactory sealing properties to the containers.

We have now found that it is possible to produce a soft, elastomeric, foamed structure having fine, uniformly-sized voids which has desirable properties, especially when used as a gasket in a container closure. The foamed structure is formed from a hot melt composition.

In the present invention a foamed composition comprises at least one thermoplastic polymer and is characterised in that it contains up to 10% by weight of at least one salt of a sulfonated styrene polymer. A novel method of producing a composition according to the invention comprises heating a hot melt composition comprising at least thermoplastic polymer and a minor amount of at least one salt of a sulfonated styrene polymer to a fluid state and foaming the fluid composition using a gaseous blowing agent. The fluid compositions which contain a blowing agent and formed in the method of the invention are also new.

The foamed compositions and the foamable molten compositions produced in the invention have very fine, uniformly-sized voids. Such a cellular structure is important in, for example, the use of the hot melt composition in the sealing of container closures. The smaller and more uniform the voids, the more stable and long lived the foamed hot melt and therefore the easier it is to handle. Additionally the sealing properties of the foamed composition that is produced are improved.

The foamble hot melt composition of the invention comprises at least one thermoplastic polymer, preferably an elastomer, a foaming agent and up to about 10% by weight of at least one salt of a sulfonated styrene polymer. The hot melt composition preferably includes from about 20 to about 70% by weight of thermoplastic polymer, from about 25 to about 65% by weight of plasticiser, and from about 0 to about 20% by weight of a tackifying resin. Optionally, one or more surfactants can be substituted for a portion of the sulfonated styrene polymer salt component. In addition, the hot melt composition of the invention may contain antioxidants and fillers.

Suitable thermoplastic polymers are preferably synthetic non-ionomeric polymers and may include, among others, a block copolymer of styrene and butadiene; a block copolymer of styrene and ethylene butylene; a block copolymer of styrene and isoprene; a copolymer of ethylene and vinyl acetate; and the polyethylene based thermoplastic polymer component in "Eastobond A-3" (Eastobond is a Registered Trade Mark) adhesive composition, manufactured by Eastman Chemical Company. The preferred thermoplastic polymer is a block copolymer of styrene and butadiene.

The compositions of the invention comprise one or more salts of a sulfonated styrene polymer. The salts are generally alkali metal salts or amine salts of the sulfonated polymers. There may be two types of salts of the same polymer, for example the sodium and the ammonium salt of one type of polymer or there may be salts of two or more different types of sulfonated styrene polymers in the compositions. For example there may be included in the composition the sodium salts of two different polymers.

Suitable salts of sulfonated styrene polymers include, among others, a salt of a sulfonated copolymer of maleic anhydride and styrene; a salt of a sulfonated copolymer of divinylbenzene and styrene; and a salt of sulfonated polystyrene. Salts are usually alkali metal salts, preferably sodium salts of the sulfonated polymers.

The sulfonated styrene polymer salt can be used alone or optionally in combination with a surfactant, as described in the following examples. While the ionic surfactant, sodium dodecylbenzene sulfonate was used in the examples, other surfactants can be used in the compositions of the invention, for example those mentioned in US—A—4,259,402.

The compositions may comprise conventional plasticising or processing aids of which a suitable example is a mineral oil or other hydrocarbon oil. A tackifying resin may be added to the composition if desired. Suitable tackifying resins are polystyrene resins and the preferred resin is a polymerised dipentene.

The method of the invention may be carried out in conventional apparatus used for providing foamed compositions, for example in the apparatus disclosed in US—A—4,295,573. The apparatus disclosed in that specification mixes the foamable hot melt composition with a gaseous blowing agent such as nitrogen, carbon dioxide or air while the composition is in a fluid or molten state. Pressure above atmospheric is applied to the hot fluid mixture and upon dispensing of the hot mixture at atmospheric pressure, the gaseous blowing agent expands causing voids to be formed in the applied composition. The use of the salt of sulfonated styrene polymer optionally in combination with a surfactant has been found to produce a structure comprised of small and uniform voids. Such a void structure is important for example in use of the foamed hot melt as a sealing gasket in container closures, where consistent, uniform sealing between all areas of the gasket and the sealed container, for example glass bottle, is desired.

The foamable compositions of the invention are particularly suited for use as sealants in closures for containers, but it will be obvious to one skilled in the art that such compositions can be used in other applications, for example as adhesives and/or sealants in applications outside of the container closure field.

The following examples illustrate the invention. In the examples the term parts refers to parts by weight. Some of the results of the examples are shown in the accompanying drawings in which:

Figure 1 is a graph showing the void size distribution of the foamed hot melt composition of Example 1.

Figure 2 is a graph showing the void size distribution of the foamed hot melt composition of Example 2.

Figure 3 is a graph showing the void size distribution of the foamed hot melt composition of Example 3.

Figure 4 is a graph showing the void size distribution of the foamed hot melt composition of Example 4.

Figure 5 is a graph comparing the average void diameters of the foamed hot melt compositions of Examples 1—4 and 6—10.

Figure 6 is a graph comparing the void size distribution of the foamed hot melt compositions of Examples 2 and 10.

Example 1

To a heated (350°F/177°C) mixer was charged 50 parts styrene-ethylene, butylene-styrene block copolymer, 50 parts mineral oil, and 1.5 parts of an antioxidant. The foregoing ingredients were mixed for approximately 45 minutes while raising the temperature of the batch to 171°C (340°F). 10 parts of a liquid hydrocarbon tackifying resin (polymerised dipentene) was added, and the materials were mixed until the batch was homogeneous (the batch temperature was maintained at 160—171°C (320—340°F) during mixing). Heating was discontinued and 1 part each of the following was added gradually (a) sodium salt of dodecylbenzene sulfonate (containing 10% sodium sulfate) and (b) sodium salt of a sulfonated copolymer of styrene and maleic anhydride.

The foamable hot melt composition was then applied to the interior of a polypropylene bottle cap to produce a sealing gasket therein by dispensing the composition in the form of a foam into the cap using the apparatus and method disclosed in US—A—4,295,573. Briefly, such apparatus heated (191—204°C/375—400°F) and mixed the composition with nitrogen blowing gas under pressure, and dispensed the hot composition to the cap in the form of a foam. Upon cooling, an annular sealing gasket of foamed hot melt was obtained.

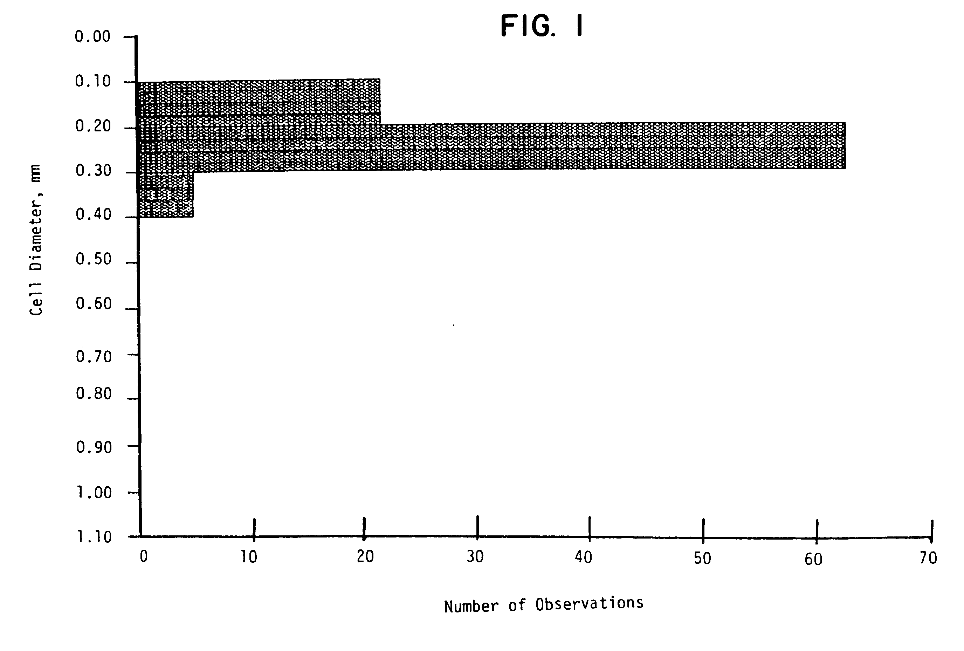

The characterisation of the void structure of the foamed hot melt of this example, as depicted in Figure 1, was as follows:

$\overline{D}$ (Average void diameter) =0.217 mm
s (Standard deviation) =0.49 mm
cv (coefficient of variation $S/D \times 100$) =23%
n (number of observations) =90

The foamed hot melt composition had a volume of voids of approximately 40%.

Example 2

The procedure of Example 1 was repeated, except styrene-butadiene-styrene block copolymer was used in place of styrene-ethylene butylene-styrene block copolymer; 40 parts of mineral oil were used; 0.5 parts of an antioxidant were used; and 1 part of a sodium salt of sulfonated polystyrene was used instead of the 1 part of each of (a) the sodium salt of dodecylbenzene sulfonate and (b) the sodium salt of a sulfonated copolymer of styrene and maleic anhydride.

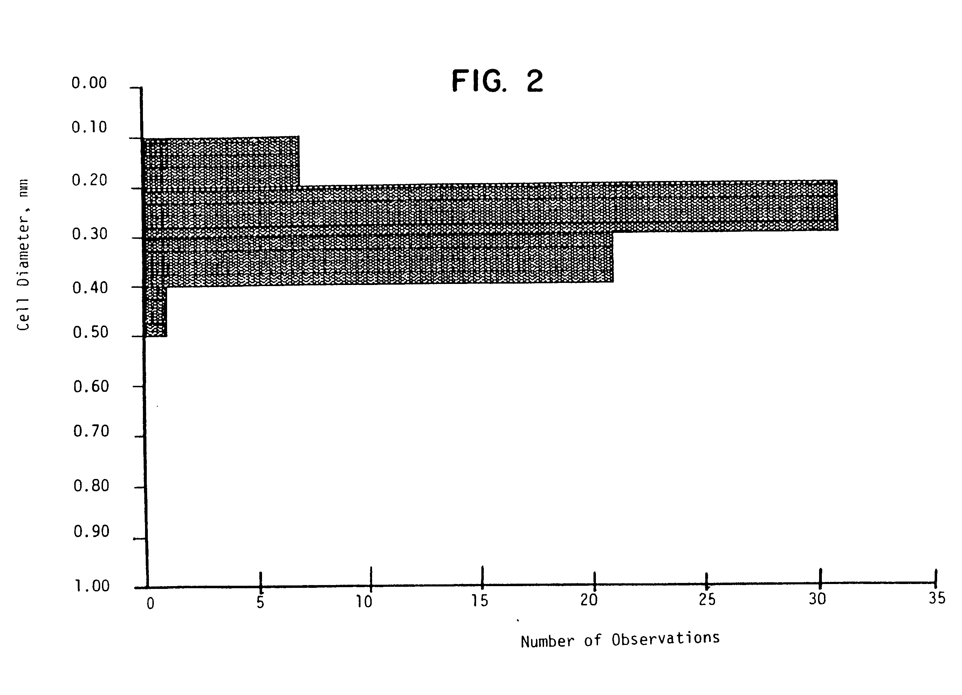

The characterisation of the void structure of the foamed hot melt of this example, as depicted in Figure 2, was as follows:

$\overline{D}$=0.268 mm
s=0.058 mm
cv=22%
n=60

3

Example 3

The procedure of Example 1 was repeated, except 100 parts of "Eastobond® A-3", manufactured by Eastman Chemical Company were used in place of the 50 parts of styrene-ethylene butylene-styrene block copolymer; no mineral oil was added; no polymerised dipentene resin was added; and 0.5 parts of an antioxidant were added.

"Eastobond® A-3" is a conventional polyethylene based adhesive composition. "Eastobond® A-3" is not considered an elastomeric composition since it is not rubbery at room temperature, but rather is rubbery above room temperature.

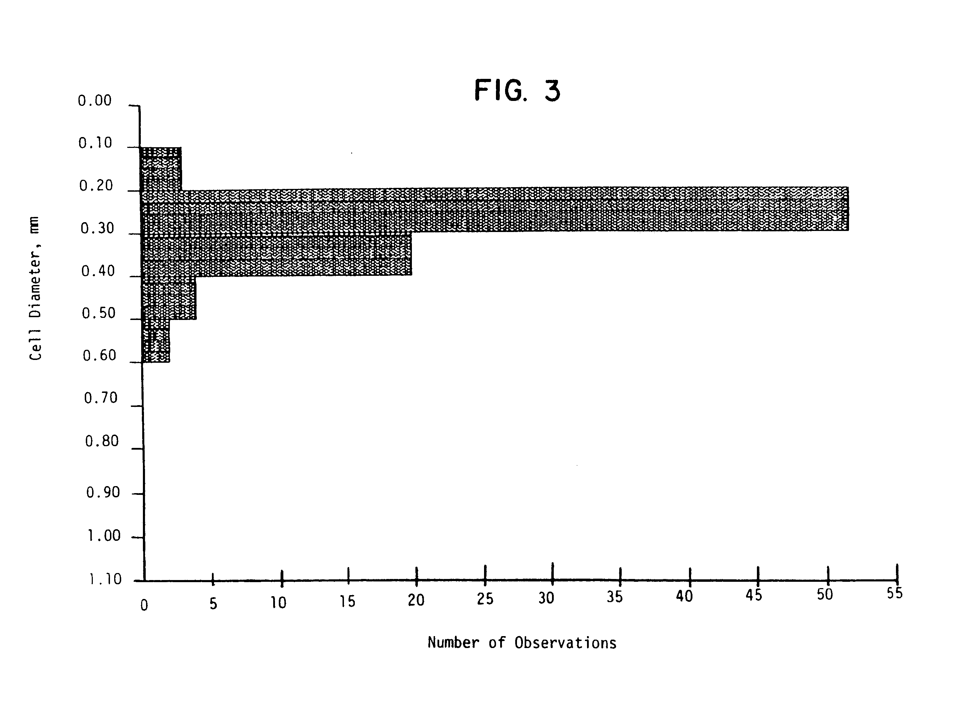

The characterisation of the void structure of the foamed hot melt of this example, as depicted in Figure 3 was as follows:

$$\bar{D}=0.264 \text{ mm}$$
$$s=0.073 \text{ mm}$$
$$cv=28\%$$
$$n=81$$

Example 4

The procedure of Example 1 was repeated, except 40 parts of styrene-butadiene-styrene block copolymer and 10 parts of styrene-isoprene-styrene block copolymer were used in place of 50 parts of styrene-ethylene butylene-styrene block copolymer; 40 parts of mineral oil were used; and 1 part of a sodium salt of the sulfonated copolymer of divinylbenzene and styrene was used in place of 1 part of the sodium salt of sulfonated copolymer of maleic anhydride and styrene.

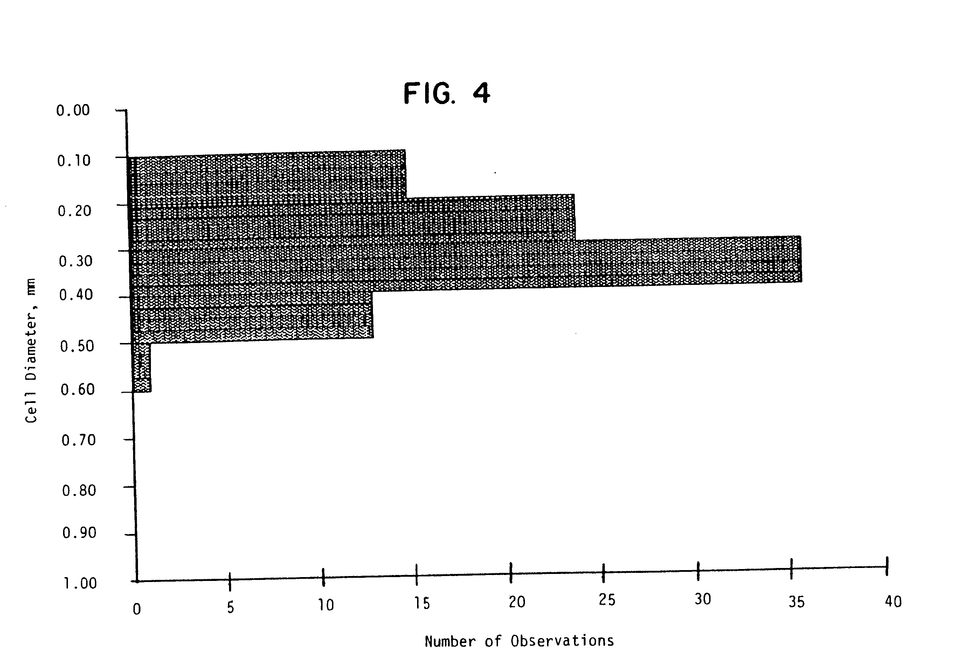

The characterisation of the void structure of the foamed hot melt of this example, as depicted in Figure 4 was as follows:

$$\bar{D}=0.306 \text{ mm}$$
$$s=0.100 \text{ mm}$$
$$cv=33\%$$
$$n=90$$

Example 5

The procedure of Example 1 was repeated, except styrene-butadiene-styrene block copolymer was used in place of styrene-ethylene butylene-styrene copolymer; 40 parts of mineral oil were used; and polystyrene resin was used in place of polymerised dipentene resin.

Examples 6—10—Prior art

The procedure of Example 2 was repeated, except that one part of the sodium salt of sulfonated polystyrene was not added, but was rather replaced (a) in Example 6 by nothing; (b) in Example 7 by 1 part of titanium dioxide; (c) in Example 8 by 1 part of sodium dioctyl sulfosuccinate; (d) in Example 9 by 1 part of sodium dodecyl sulfate and 1 part of block copolymer of ethylene oxide and propylene oxide; and (e) in Example 10 by 1 part of zinc salt of ethylene methacrylic acid copolymer.

The characterisations of the void structures of the foamed hot melts of Examples 6—10 were as follows:

| | Ex. 6 | Ex. 7 | Ex. 8 | Ex. 9 | Ex. 10 |
|---|---|---|---|---|---|
| $\bar{D}$ (mm) | 0.625 | 0.557 | 0.633 | 0.468 | 0.435 |
| s (mm) | 0.174 | 0.230 | 0.217 | 0.156 | 0.144 |
| cv (%) | 28 | 41 | 34 | 33 | 33 |
| n | 60 | 46 | 50 | 102 | 80 |

Examples 7—10 depict the prior art practice, as disclosed in US—A—4,156,754 and US—A—4,259,402, of adding surfactants to a thermoplastic polymer. Previously in the prior art, no surfactant was added to the thermoplastic polymer, as depicted in Example 6.

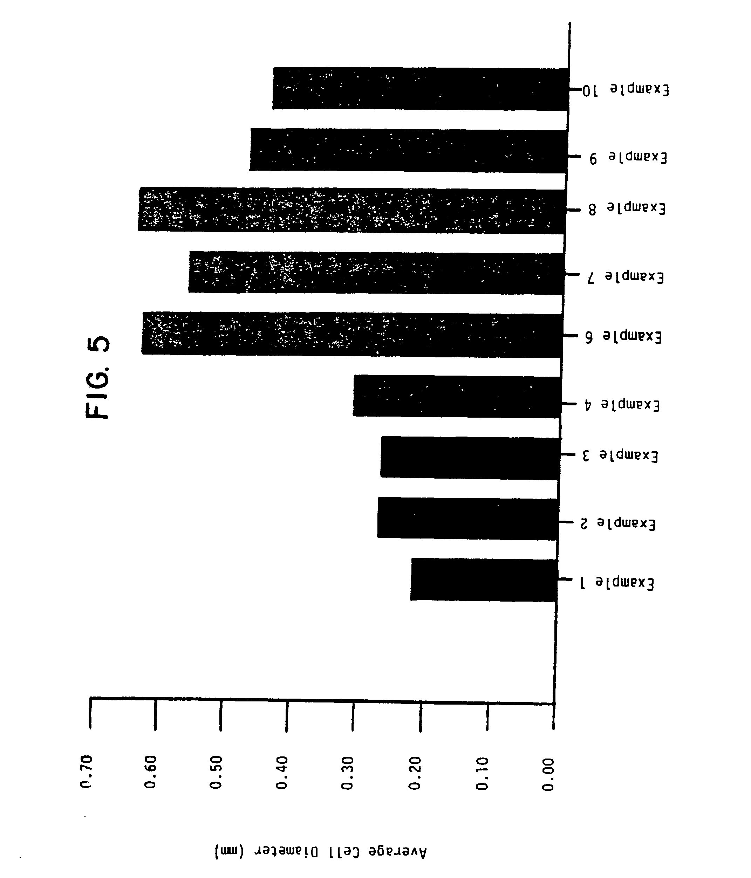

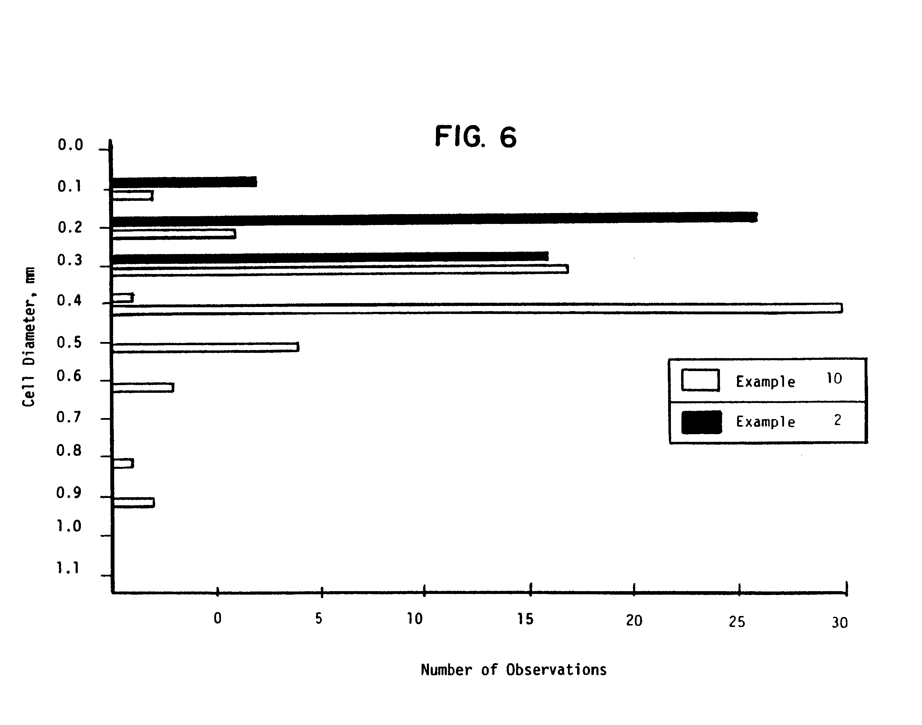

As seen graphically in Figures 5 and 6, if a salt of a sulfonated styrene polymer is used alone with a thermoplastic polymer or optionally in combination with a traditional surfactant, the result is a foamed hot melt having a smaller and more uniform void structure.

**Claims**

1. A foamed composition comprising at least one thermoplastic polymer characterised in that it contains up to 10% by weight of at least one salt of a sulfonated styrene polymer.

4

2. A foamed composition according to claim 1 which constitutes a sealing gasket on a container closure.

3. A foamable molten composition comprising at least one thermoplastic polymer and a blowing agent, characterised in that it contains up to 10% by weight of at least one salt of a sulfonated styrene polymer.

4. A composition according to any preceding claim in which the sulfonated styrene polymer is sulfonated polystyrene or a sulfonated copolymer of styrene and maleic anhydride or of styrene and divinylbenzene.

5. A composition according to any preceding claim in which the thermoplastic polymer comprises a non-ionomeric synthetic thermoplastic polymer.

6. A composition according to any preceding claim in which the thermoplastic polymer comprises an elastomeric polymer, preferably a block copolymer of styrene and butadiene.

7. A composition according to any preceding claim which additionally comprises a plasticising agent, preferably a mineral oil, a tackifying agent, preferably polymerised dipentene, a surfactant, preferably sodium dodecylbenzene sulfonate, and/or an antioxidant.

8. A method of producing a foamed composition in which a hot melt composition comprising at least one thermoplastic polymer is heated to a fluid state and is foamed by gaseous blowing agent, characterised in that the hot melt composition comprises up to 10% by weight at least one salt of a sulfonated styrene polymer.

9. A method according to claim 8 in which the fluid composition is mixed with the blowing agent under elevated pressure and the fluid foamed composition is dispensed at atmospheric pressure and is preferably then cooled.

10. A method according to claim 8 in which the fluid foamed composition is dispensed and deposited on to a container closure to provide a sealing gasket.

11. A method according to any one of claims 8 to 10 in which the sulfonated styrene polymer is a sulfonated polystyrene or a sulfonated copolymer of styrene and maleic anhydride or of styrene and divinylbenzene.


**Patentansprüche**

1. Geschäumte Masse, die zumindest ein thermoplastisches Polymer enthält, dadurch gekennzeichnet, daß sie bis zu 10 Gew.-% zumindest eines Salzes eines sulfonierten Styrolpolymers enthält.

2. Geschäumte Masse nach Anspruch 1, dadurch gekennzeichnet, daß sie eine Dichtung an einem Behälterverschluß bildet.

3. Schäumbare, geschmolzene Masse, die zumindest ein thermoplatisches Polymer und ein Treibmittel enthält, dadurch gekennzeichnet, daß sie bis zu 10 Gew.-% zumindest eines Salzes eines sulfonierten Styrolpolymers enthält.

4. Masse nach einem der vorhergehenden Ansprüche, worin das sulfonierte Styrolpolymer sulfoniertes Polystyrol oder ein sulfoniertes Copolymer von Styrol und Maleinsäureanhydrid oder von Styrol und Divinylbenzol ist.

5. Masse nach einem der vorhergehenden Ansprüche, worin das thermoplastische Polymer ein nicht-ionomeres synthetisches thermoplastisches Polymer umfaßt.

6. Masse nach einem der vorhergehenden Ansprüche, worin das thermoplastische Polymer ein elastomeres Polymer, vorzugsweise ein Blockcopolymer von Styrol und Butadien umfaßt.

7. Masse nach einem der vorhergehenden Ansprüche, die zusätzlich einen Weichmacher, vorzugsweise ein Mineralöl, ein Haftmittel, vorzugsweise polymerisiertes Dipenten, ein grenzflächenaktives Mittel, vorzugsweise Natriumdodecylbenzolsulfonat, und/oder einen Oxidationsinhibitor enthält.

8. Verfahren zur Herstellung einer geschäumten Masse, bei welchem eine heiß schmelzende Masse, die zumindest ein thermoplastisches Polymer umfaßt, bis zum flüssigen Zustand erhitzt und mittels eines gasförmigen Treibmittels geschäumt wird, dadurch gekennzeichnet, daß die heiß schmelzende Masse bis zu 10 Gew.-% zumindest eines Salzes eines sulfonierten Styrolpolymers enthält.

9. Verfahren nach Anspruch 8, dadurch gekennzeichnet, daß die flüssige Masse mit dem Treibmittel unter erhöhtem Druck vermischt wird und daß die flüssige, geschäumte Masse bei Atmosphärendruck abgelassen und vorzugsweise dann gekühlt wird.

10. Verfahren nach Anspruch 8, dadurch gekennzeichnet, daß die flüssige, geschäumte Masse abgelassen und auf einen Behälterverschluß unter Bildung einer Dichtung aufgebracht wird.

11. Verfahren nach einem der Ansprüche 8 bis 10, bei welchem das sulfonierte Styrolpolymer ein sulfoniertes Polystyrol oder ein sulfoniertes Copolymer von Stryol und Maleinsäureanhydrid oder von Styrol und Divinylbenzol ist.


**Revendications**

1. Composition de mousse comprenant au moins un polymère thermoplastique, caractérisée en ce qu'elle contient jusqu'à 10% en poids d'au moins un sel d'un polymère de styrène sulfoné.

5

**0 153 042**

2. Composition de mousse selon la revendication 1 qui constitue un joint d'étanchéité d'une fermeture de récipient.

3. Composition moussable fondue comprenant au moins un polymère thermoplastique et un agent de gonflement, caractérisée en ce qu'elle contient jusqu'à 10% en poids d'au moins un sel d'un polymère de styrène sulfoné.

4. Composition selon l'une des revendications précédentes, dans laquelle le polymère de styrène sulfoné est le polystyrène sulfoné où un copolymère sulfoné de styrène et d'anhydride maléïque ou de styrène et de divinylbenzène.

5. Composition selon l'une des revendications précédentes, dans laquelle le polymère thermoplastique comprend un polymère thermoplastique synthétique non-ionomère.

6. Composition selon l'une des revendications précédentes, dans laquelle le polymère thermoplastique comprend un polymère élastomère, de préférence un copolymère séquencé de styrène et de butadiène.

7. Composition selon l'une des revendications précédentes, qui comprend en outre un agent plastifiant, de préférence une huile minérale, un agent collant, de préférence du dipentène polymérisé, un tensio-actif, de préférence le dodécylbenzène sulfonate de sodium, et/ou un anti-oxydant.

8. Procédé de production d'une composition de mousse dans lequel une composition thermofusible comprenant au moins un polymère thermoplastique est chauffée à un état fluide et est transformée en mousse par un agent de gonflement gazeux, caractérisé en ce que la composition thermofusible comprend jusqu'à 10% en poids d'au moins un sel d'un polymère de styrène sulfoné.

9. Procédé selon la revendication 8, dans lequel la composition fluide est mélangée avec l'agent de gonflement sous pression élevée et la composition de mousse fluide est distribuée à la pression atmosphérique et est de préférence alors refroidie.

10. Procédé selon la revendication 8, dans lequel la composition de mousse fluide est distribuée et déposée sur une fermeture de récipient pour produire un joint d'étanchéité.

11. Procédé selon l'une des revendications 8 à 10, dans lequel le polymère de styrène sulfoné est un polystyrène sulfoné ou un copolymère sulfoné de styrène et d'anhydride maléïque ou de styrène et de divinylbenzène.

6

FIG. 1

FIG. 2

Cell Diameter, mm

0.00
0.10
0.20
0.30
0.40
0.50
0.60
0.70
0.80
0.90
1.00

Number of Observations

0   5   10   15   20   25   30   35

2

FIG. 3

FIG. 4

0 153 042

FIG. 5

FIG. 6

0 153 042